# EUROPÄISCHE PATENTSCHRIFT

(11) **EP 1 233 857 B1**
(45) Veröffentlichungstag und Bekanntmachung des Hinweises auf die Patenterteilung: **02.07.2003**
(21) Anmeldenummer: 00990623.1
(22) Anmeldetag: 30.11.2000
(51) Int. Cl.: B29C 45/16

(54) **VERFAHREN UND VORRICHTUNG ZUM HERSTELLEN EINES KUNSTSTOFFFORMTEILS, WELCHES MEHRERE FELDER UMFASST**
METHOD AND DEVICE FOR PRODUCING A MOULDED PLASTIC PART, COMPRISING SEVERAL ZONES
PROCEDE ET DISPOSITIF DE FABRICATION D'UNE PIECE MOULEE EN MATIERE SYNTHETIQUE COMPRENANT PLUSIEURS ZONES

(30) Priorität: 03.12.1999 DE 19958316
(43) Veröffentlichungstag der Anmeldung: 28.08.2002
(73) Patentinhaber: Schmitz, Hans H., 58332 Schwelm (DE)
(72) Erfinder: Schmitz, Hans H., 58332 Schwelm (DE)
(74) Vertreter: Ludewig, Karlheinrich, Dipl.-Ing.
(86) Internationale Anmeldenummer: EP0012004
(87) Internationale Veröffentlichungsnummer: WO01039952

(56) Entgegenhaltungen:
- WO-A-98/00279
- PATENT ABSTRACTS OF JAPAN vol. 2000, no. 07, 29. September 2000 (2000-09-29) -& JP 2000 117773 A (INOAC CORP), 25. April 2000 (2000-04-25) -& DATABASE WPI Week 200032 Derwent Publications Ltd., London, GB; AN 2000-369541 XP002164707
- PATENT ABSTRACTS OF JAPAN vol. 1999, no. 3, 31. März 1999 (1999-03-31) -& JP 10 315241 A (TOYOTA MOTOR CORP), 2. Dezember 1998 (1998-12-02)
- PATENT ABSTRACTS OF JAPAN vol. 1998, no. 1, 30. Januar 1998 (1998-01-30) -& JP 09 254199 A (KANTO AUTO WORKS LTD), 30. September 1997 (1997-09-30)

## Beschreibung

Die Erfindung richtet sich auf ein Verfahren zur Herstellung eines Kunststoffformteils mit mehreren Feldern nach der im Oberbegriff des Anspruches 1 genannten Art sowie auf eine Vorrichtung zur Herstellung eines derartigen Kunststoffformteils mit mehreren Feldern nach der im Oberbegriff des Anspruchs 1 genannten Art.

Bei einem Verfahren der obengenannten Art ist aus der DE 197 34 686 A1 bekannt, ein Kunststoffformteil mit kaschierten und mit spritzblanken Feldern in einem Arbeitsgang herzustellen. Dazu wird der Kunststoffträger des kaschierten Feldes aus einem als Massekuchen unter relativ geringem Druck eingebrachten Kunststoff und der Kunststoffträger des spritzblanken Feldes aus einem unter hohem Druck eingespritzten Kunststoff in einem Arbeitsschritt hergestellt. Die diesbezüglich angegebenen Formenwerkzeuge weisen hierzu Schieber auf, die in den zwischen den Matritzen des Formwerkzeugs liegenden Formhohlraum eingefahren werden können, und mittels derer die Felder gegeneinander abgedichtet werden sollen. Die Ränder des Abdeckmaterials für die zu kaschierenden Felder werden mittels der Schieber an die, den Schiebern gegenüberliegenden Matritzenflächen der Form angedrückt, um die zu kaschierenden Felder derart gegen die spritzblanken Felder abzudichten. Die Ränder des Abdeckmaterials ragen dabei auch in den Formhohlraum des spritzblanken Feldes hinein.

Bei dem Hochdruckspritzen in dem Formhohlraum der spritzblanken Felder werden diese überstehenden Ränder mit umspritzt.

Hieraus ergibt sich der große Nachteil, daß diese Fortsätze des Abdeckmaterials wie Sollbruchstellen an den Nahtstellen zwischen spritzblanken und kaschierten Feldern wirken.

Ferner ist bei dem Verfahren nach dem Stand der Technik von Nachteil, daß die Abdichtung der spritzblanken und der kaschierten Felder über die dort angegebenen Schieber nicht vollkommen gewährleistet ist. So kann es in der Praxis vorkommen, daß das Kunststoffträgermaterial, welches unter hohem Druck in die spritzblanken Felder eingespritzt wird, auch in den Formhohlraum der zu kaschierenden Felder eindringt und dort partiell das Abdeckmaterial aufschmilzt und absorbiert. Dieses verursacht eine relativ hohe Ausschußquote, welche das Verfahren in der Praxis recht teuer macht.

Aus der WO 96/25282 A1 ist ein Verfahren zum Herstellen eines Auskleidungsteiles aus Kunststoff und ein insbesondere nach diesem Verfahren hergestelltes Auskleidungsteil bekannt. Bei diesem bekannten Verfahren erfolgt sowohl die Festlegung eines vorgeformten oder in sich nicht formstabilen, konturierten Teiles in der Kavität der Spritzgießform als auch die Begrenzung oder die Freigabe von mindestens zwei unmittelbar benachbarten Bereichen in der Kavität mittels wenigstens eines schieberartigen sowie kontur- und formgebenden Trennelementes, welches Bestandteil der Spritzgießform ist. Diesem Trennelement gegenüberliegend kann ferner noch ein auf dieses Trennelement ausgerichtetes Formelement angeordnet sein. Trennelement und Formelement dienen dabei der Verbesserung der Abdichtung, die jedoch bei diesem Verfahren nicht vollständig erreicht werden kann.

Aus der JP 2-47021 (A) ist es bekannt, zur Herstellung von Automobil-Innenverkleidungen eine Spritzgußform zu verwenden, in deren einem Formwerkzeug ein beweglicher Kern angeordnet ist, der die selektive Freigabe vom Formhohlraumvolumen ermöglicht. Dazu wird der Kern von seiner Anlageposition am gegenüberliegenden Formwerkzeug unter Freigabe eines Formhohlraumvolumens aus der Spritzgußform herausbewegt.

Auch bei diesem Formwerkzeug ist von Nachteil, daß über den Kern, wenn er am gegenüberliegenden Formwerkzeug anliegt, keine vollständige Abdichtung der oberhalb und unterhalb des Kerns liegenden Kavitäten erreicht wird.

Aufgabe der Erfindung ist es, ein Verfahren der eingangs genannten Art zu entwickeln, durch welches die beschriebenen Nachteile vermieden werden.

Dieses wird erfindungsgemäß durch die Merkmale des Anspruchs 1 erreicht, denen folgende besondere Bedeutung zukommt.

Die Besonderheit der dort beschriebenen Maßnahmen liegt zunächst darin, an der Matritze, an die das Abdeckmaterial angelegt wird, ein Schwertteil anzuordnen, welches die Grenze der spritzblanken und der zu kaschierenden Felder definiert. Auf Seiten der zu kaschierenden Felder werden an diesem Schwertteil die umgebogenen Ränder des Abdeckmaterials, welches günstigerweise als Vorformling ausgebildet ist angelegt. Ferner wird bei dem Abschliessen der Formhohlräume der spritzblanken sowie der kaschierten Felder voneinander, der Schieber derart gegen das Schwertteil gefahren, daß er dieses umfasst.

Der Schieber weist dazu an seinem, dem Schwertteil zugewandten Ende eine spezielle Ausformung auf, mit der er das Schwertteil und/oder die Ränder des Abdeckmaterials in seiner Verschlußlage zumindest partiell umfasst. Ferner kann es günstig gemäß Anspruch 1 sein, wenn nach dem Abschließen der spritzblanken und der zu kaschierenden Felder von einander zunächst in den Formhohlräumen der zu kaschierenden Felder eine Kunststoffschmelze unter Niederdruck in den Formhohlraum eingespritzt wird, und darauffolgend nach einem teilweisen Zurückfahren des Schiebers unter Öffnung eines Kanals zwischen dem Schieber und dem formhohlraumseitigen Ende des Schwertteils in dem Formhohlraum der spritzblanken Felder eine Kunststoffschmelze unter Hochdruck eingespritzt wird. Bei diesem zweiten Einspritzvorgang der Kunststoffschmelze unter Hochdruck kann im Bereich der zu kaschierenden Felder wenigstens bereichsweise eine gesteuerte Kühlung vorgesehen sein, die vorteilhafterweise ein Wiederaufschmelzen des Kunststoffträgers des kaschierten Feldes verhindert, und nur eine vorgesehene Teilaufschmelzung in einem vorzubestimmenden Randbereich des kaschierten Feldes zuläßt.

Von Vorteil gemäß Anspruch 3 ist es ferner, wenn das Schwertteil beweglich in der Matritze gelagert ist, an der das Abdeckmaterial angelegt wird, und das Schwertteil in seiner Beweglichkeit elastisch druckbeaufschlagt ist. Durch diese Maßnahme wird auf jeden Fall ein korrektes Abschließen der beiden Felder voneinander erreicht. Ferner ist es gemäß Anspruch 3 günstig, wenn das Schwertteil seinem Ausfuhrhub in den Formhohlraum hinein über Steuermittel begrenzt ist. Dieser Ausfuhrhub kann über die verstellbar vorgesehenen Stellmittel auch verändert werden und hierdurch vorteilhafterweise an unterschiedlich dicke Abdeckmaterialien angepaßt werden.

Günstig gemäß Anspruch 8 kann es ferner sein, wenn gleichzeitig mit dem Schließen des Formwerkzeugs, d. h. wenn beide Matritzen aufeinander zubewegt werden, die an dem Schwert anliegenden Ränder des oder jeden Abdeckmaterials an das Schwertteil angedrückt werden. Dieses Andrücken bleibt auch nach einem Zurücknehmen des Schiebers und der Öffnung des Kanals bestehen. Durch diese Maßnahme wird in vorteilhafterweise verhindert, daß bei der Durchführung des Hochdruck-Kunststoffspritzens in dem spritzblanken Feld, wodurch auch unter Hochdruck stehende Kunststoffschmelze über den Kanal hindurch in den Seitenbereich des kaschierten Feldes gelangt, die Ränder des Abdeckmaterials von der Wand weggedrückt werden, und hierdurch eine Sollbruchstelle aufgrund der zonalen Schwächung des Kunststoffträgers erzeugt wird.

Gemäß Anspruch 9 ist es günstig, wenn vor dem Einlegen des Abdeckmaterials in das Formwerkzeug das Abdeckmaterial, insbesondere dessen Rückseite, durch Erwärmung und Teilaufschmelzung zu einer Kunststofflage verschmolzen wird, die bereits die Form des zu fertigenden Kunststoffformteils an der vorbestimmten Stelle des Abdeckmaterials ausweist. Diese Form wird aufgrund der Temperung der Rückseite bereits fixiert. Ebenso werden die Ränder durch diese Temperung so formsteif, daß sie, wenn der Schieber diese Ränder umfaßt, diese nicht wegbiegen, sondern an dem Schwert anliegen bleiben. Das Abdeckmaterial ist dazu zumindest rückseitig z. B. aus einem Nadel- und/oder Spinnflies gefertigt, welcher aus thermoplastisch formbaren Kunststofffasern besteht. Es können natürlich auch andere textile oder auch Schaumwerkstoffe derart vorfixiert und vorgeformt werden. Die Frontseite (Schauseite) des Abdeckmaterials kann mit einem Dekor, z. B. textiler Art, Leder etc. versehen sein.

Aufgabe der Erfindung ist es ferner, eine Vorrichtung der Eingangs genannten Art zu entwickeln, die die beschriebenen Nachteile vermeidet.

Die Besonderheit der erfindungsgemäßen Vorrichtung gemäß Anspruch 11 liegt darin, im Bereich der ersten Matritze, an der das Abdeckmaterial angelegt wird, wenigstens ein, als separates Bauteil ausgeführtes Schwertteil anzuordnen, welches der Trennung der spritzblanken und der zu kaschierenden Felder voneinander dient. Ferner weist der oder jeder Schieber an seinem in den Formhohlraum hineinragenden Ende eine Nut auf, welches auf die freien Enden des oder jeden Schwertteiles sowie die freien Enden der daran anliegenden Ränder des Abdeckmaterials aufgefahren werden kann, wobei die freien Enden dann vom Schieber umfasst werden.

Durch dieses Umfassen der freien Enden der Schwertteile und der Ränder des Abdeckmaterials durch den Schieber werden die spritzblanken und die zu kaschierenden Felder in der Arbeitsstellung des Formwerkzeugs auf optimale Weise voneinander getrennt. Ein Übergang von Schmelzen durch diese Barriere ist nicht möglich.

Idealerweise sind an dem Schwert Steuermittel angeordnet, über welche das Schwert in seinem Ausfuhrhub aus der Matritze heraus in den Formhohlraum hinein eingestellt werden kann, wie es Anspruch 12 vorsieht. Es ist nämlich günstig, wenn die freien Enden des Schwertteils oder der Schwertteile sowie die Ränder des Abdeckmaterials auf gleicher Höhe liegen und derart in der Arbeitsstellung des Schiebers beide den Boden der im Schieber angeordneten Nut erreichen, um eine optimale Abdichtung zu ermöglichen.

Die Steuermittel können z. B. sein eine oder mehrere Stellschrauben, die in einem Gewinde im rückwärtigen Ende des Schwertteiles eingreifen, und die sich andererseits an der Matritze abstützen, und über deren Verstellung der Ausfuhrhub des Schwertteils eingestellt werden kann. Günstigerweise gemäß Anspruch 12 und 13 ist das Schwertteil weiterhin elastisch beaufschlagt, so daß, wenn der Schieber gegen das Schwertteil fährt, dieses unter dem Federdruck nachgeben kann, und die Federkraft dann das Schwert gegen den Schieber drückt und derart eine gute Abdichtung der Naht erreicht wird.

Gemäß Anspruch 15 kann es auch günstig sein, wenn die, den Ausfuhrhub steuernden Mittel ein oder mehrere Exzenter umfassen, die über den Ausfuhrhub des Schwertteiles verstellt werden kann.

In einer weiteren, vorteilhaften Ausführungsform gemäß Anspruch 16 weist der Schieber im Bereich der Öffnung der Nut eine konische Ausformung auf, so daß das Schwertteil und gegebenenfalls die Ränder des Abdeckmaterials aufgrund der Konizität der Öffnung auf jeden Fall gefangen werden, wenn es auf die Nut zufährt,

Günstig gemäß Anspruch 17 ist es, wenn an der zweiten Matritze Mittel angeordnet sind, über die die an dem Schwertteil anliegenden Ränder des oder jeden Abdeckmaterials/Vorformlings nach dem Schließen des Formwerkzeugs zumindest stellenweise an das Schwertteil angedrückt werden, und dieses Andrücken auch nach einem teilweisen Zurückfahren des Schiebers noch beibehalten wird. Hierdurch wird - wie bereits im vorigen beschrieben - verhindert, daß bei dem Öffnen des Kanals und dem Durchströmen der unter Hochdruck stehenden Kunststoffschmelze die am Schwertteil anliegenden Ränder unter dem Druck der Schmelze von dem Schwertteil weggedrückt und in den Formhohlraum hinein umgeklappt werden und dort Schwächezonen und mögliche Sollbruchstellen im Kunststoffträger erzeugen.

Die Mittel können z. B. Vorsprünge, Nasen oder Zapfen sein, die an dem oder den, den Schieber/n zugewandten Seitenwänden der zweiten Matritzen angeordnet sind. Im Kopfbereich des Schiebers sind in dessen Seitenwänden günstigerweise Aufnahmenuten eingelassen, in die die Vorsprünge/Nasen/Zapfen etc. bei einer Relativbewegung des Schiebers gegenüber der Matritze ein- und ausfahrbar sind. Durch die Anordnung von Aufnahmenuten, in die Mittel günstigerweise bündig einfahrbar sind, wird verhindert, daß Schmelze auch unterhalb dieser Andruckmittel abgelagert wird und dort erstarrt.

Gemäß Anspruch 19 kann es günstig sein, wenn an der zweiten Matritze wenigstens im Bereich der zu kaschierenden Felder eine Kühleinrichtung vorgesehen ist, die über eine Steuereinrichtung regelbar ist. Die Steuereinrichtung kann z. B. über Thermosensoren mit Temperaturdaten der Matritze sowie der eingeführten Schmelze versorgt werden, um so eine optimale Kühlung des zu kühlenden Bereiches zu erzielen. Durch die Kühleinrichtung kann verhindert werden, daß die unter Hochdruck stehende Schmelze, welche nach dem teilweisen Öffnen des Schiebers in die Randbereiche der zu kaschierenden Felder eintritt, einen zu großen Bereich der bereits erstarrten Niederdruck-Kunststoffträgers wieder aufschmilzt und möglicherweise auch das Abdeckmaterial von Schmelze durchdrungen wird. So kann über die Kühleinrichtung vielmehr eine genau zu bestimmende Zone partieller Aufschmelzung des Niederdruck-Kunststoffträgermaterials zur Vermischung der neu hinzutretenden Hochdruck-Kunststoffschmelze vorbestimmt werden. Dieses dient der optimalen Verbindung beider Kunststoffmaterialien miteinander zur Erzeugung eines einheitlichen Kunststoffformteils.

Gemäß Anspruch 20 wird mittels des erfindungsgemäßen Verfahrens und der erfindungsgemäßen Vorrichtung ein Kunststoffformteil erzeugt, welches im Bereich der kaschierten Felder zu den spritzblanken Feldern hin eine Übergangszone aufweist, in welcher Kunststoffträgermaterial, welches unter Niederdruck eingespritzt worden ist, durch hinzutretendes Kunststoffspiegelmaterial, welches unter Hochdruck eingespritzt worden ist, wieder aufgeschmolzen worden und dann erstarrt ist. Diese Zone liegt in einem Bereich entlang der Ränder des Abdeckmaterials, wobei die Ausdehnung der Zone über die Kühleinrichtung mit vorbestimmt wird.

Weitere Maßnahmen und Vorteile der Erfindung ergeben sich aus den Unteransprüchen der nachfolgenden Beschreibung und den Zeichnungen. In den Zeichnungen ist die Erfindung in zwei Ausführungsbeispielen dargestellt. Es zeigen:
- Fig. 1: einen Ausschnitt eines ersten Ausführungsbeispiels der erfindungsgemäßen Vorrichtung, bei der die beiden Werkzeughälften in einer geöffneten Stellung sind,
- Fig. 2a: die erste Ausführungsform der erfindungsgemäßen Vorrichtung, bei der die beiden Werkzeughälften unter Erzeugung einer Kavität geschlossen sind,
- Fig. 2b: einen Ausschnitt einer zweiten Ausführungsform der erfindungsgemäßen Vorrichtung,
- Fig. 2c: die zweite Ausführungsform gemäß Fig. 2b im Schnitt entlang der Linie IIc-IIc,
- Fig. 2d: eine dritte Ausführungsform der erfindungsgemäßen Vorrichtung,
- Fig. 3a: die. erste Ausführungsform der erfindungsgemäßen Vorrichtung in geöffneter Stellung des Schiebers,
- Fig. 3b: eine Detaildarstellung aus Fig. 3a bezüglich der zweiten Ausführungsform der erfindungsgemäßen Vorrichtung,
- Fig. 4: ein erfindungsgemäßes Kunststoffformteil,
- Fig. 5a: ein Schnitt gemäß Vₐ-Vₐ aus Fig. 4 durch ein erfindungsgemäßes Kunststoffformteil,
- Fig. 5b: ein Fig. 5a entsprechender Schnitt durch ein Kunststoffformteil gemäß dem Stand der Technik.

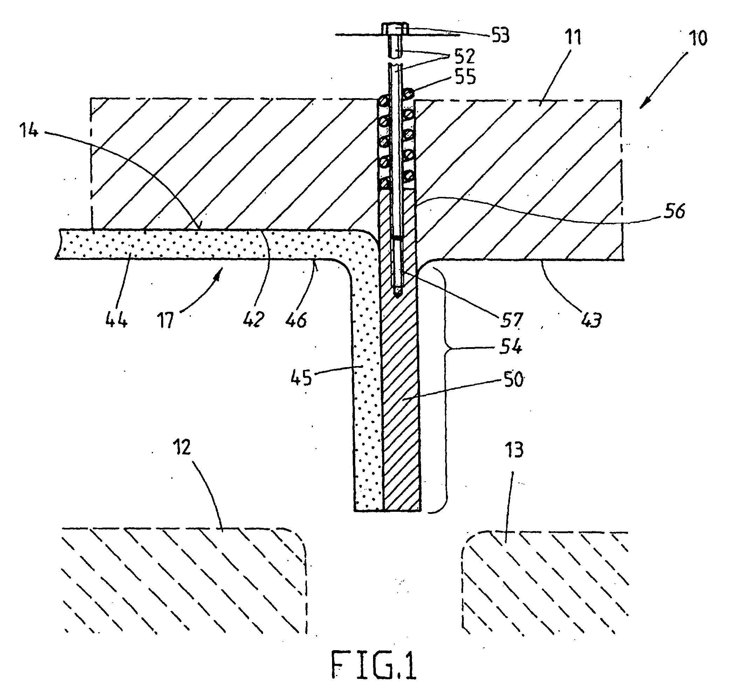

Im nachfolgenden sollen nun die erfindungsgemäße Vorrichtung anhand der Fig. 1 bis 2c und 3a bis 3b beschrieben werden und nachfolgend das Verfahren zur Erzeugung eines erfindungsgemäßen Kunststoffformteils.

In Fig. 1 ist ausschnittsweise eine erfindungsgemäße Vorrichtung dargestellt. Die erfindungsgemäße Vorrichtung umfaßt ein Formwerkzeug 10, welches eine erste Matritze 11 sowie eine dieser Matritze gegenüberliegende zweigeteilte Matritze 12, 13 enthält. Die erste Matritze 11 weist eine Aufnahme 56 auf, in der ein Schwertteil 50 beweglich gelagert ist. Das Schwertteil 50 trennt zu kaschierende Felder 42 von spritzblanken Feldern 43 ab. Das Schwertteil 50 ist in diesem Ausführungsbeispiel elastisch druckbeaufschlagt über Federelemente 55, über die das Schwertteil 50 gegenüber dem Boden der Aufnahme 56 (hier nicht zeichnerisch dargestellt) abgestützt ist.

Das Schwertteil 50 ragt über die Matritze 11 mit einem bestimmten Ausfuhrhub 54 heraus. Dieser Ausfuhrhub 54 ist in diesem Ausführungsbeispiel über Stellschrauben 52 und Stellmüttern 53 voreinstellbar. Die Stellschrauben 52 sind zu diesem Zwecke in Gewinde 57 im Bereich des hinteren Ende des oder der Schwertteile 50 einschraubbar. In der in Fig. 1 dargestellten geöffneten Stellung 17 der Matritzen 11, 12, 13 kann ein oder mehrere Stücke als Vorformling vorgeformtes Abdeckmaterial 44 an die Anlegestelle 14 an der Matritze 11 angelegt werden. In der Matritze 11 sind geeignete Mittel (z. B. eine Ansaugvorrichtung) vorhanden, die den Vorformling 44 an dem vorbestimmten Wandbereich der Matritze 11 festhalten. Der Vorformling 44 weist in diesem Ausführungsbeispiel einen Rand 45 auf, welcher an dem Schwertteil 50 anliegt und sich dort abstützt.

Vor dem Einlegen des Vorformlings 44 an die Matritze 11 des Formwerkzeugs 10 wird zunächst in einem ersten Verfahrensschritt aus Abdeckmaterial der Vorformling 44 hergestellt. Zu diesem Zweck wird in einem ersten Schritt aus einer durchgehenden Lage Abdeckmaterial eine entsprechend große Form ausgeschnitten und in einen Vorformer eingelegt, in dem das Material in einem zweiten Schritt durch Pressen bereits die, dem endgültigen Kunststoffformteil im Bereich des kaschierten Feldes entsprechende Form erhält. Diese Form wird durch Temperung der Rückseite 46 des Vorformlings (Anschmelzen des rückwärtigen Bereiches) fixiert. Es entsteht ein in sich stabiles vorgeformtes Teil. Die Besonderheit dabei ist, daß die Struktur der Dekorfläche nicht verändert wird. Als Material für den Vorformling kann z. B. Filz, Nadelflies oder Spinnflies aus thermoplastischen Kunststofffasern wie z.B. PP oder PS etc. verwendet werden. Es ist aber ebenso denkbar, daß auch Schaumstoffe, tuchbezogene Schaumstoffe etc. Verwendung als Abdeckmaterial finden können, ebenso wie z. B. auch wattiertes Kunstleder. Die Rückenmaterialien des vorformlings können auch noch mit Dekormaterial, wie z. B. textilem Gewebe, Leder, Kunstleder oder Holzprodukten versehen sein.

Der derart gefertigte Vorformling wird danach - wie bereits beschrieben - in das Formwerkzeug 10 eingelegt.

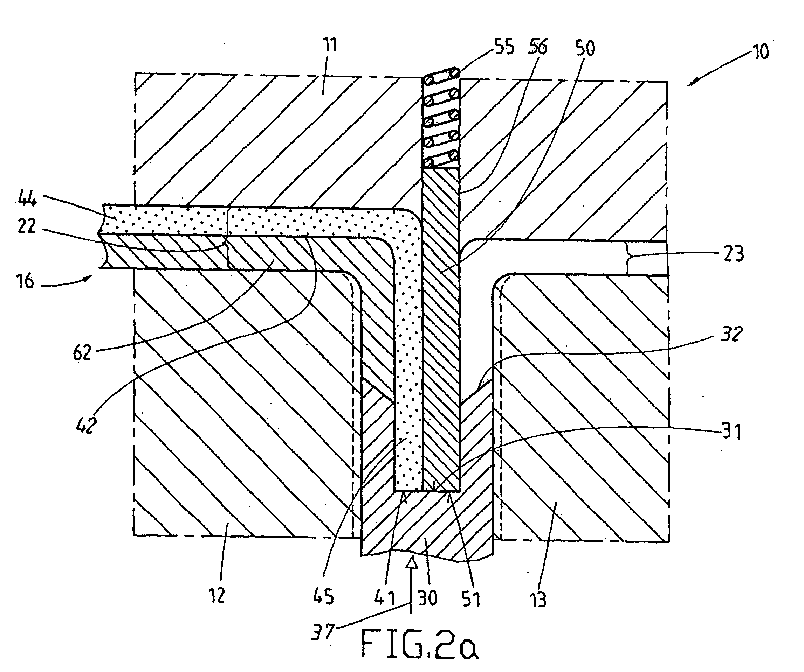

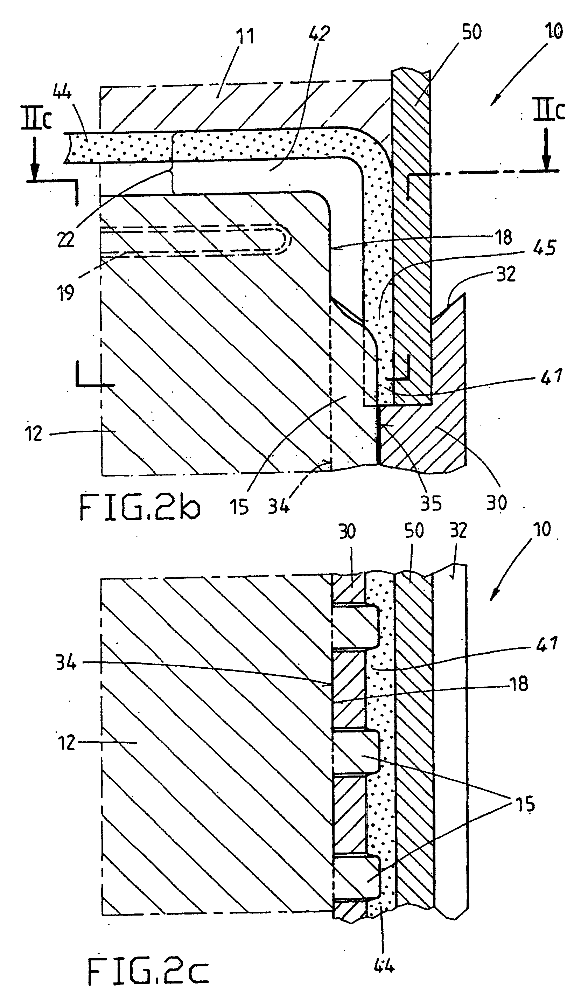

In einem weiteren Verfahrensschritt wird das Formwerkzeug 10 nun geschlossen und in die Arbeitsstellung 16 gebracht, indem die Matritze 12, 13 gegen die Matritze 11 gefahren wird, bis eine vorbestimmte Stellung erreicht ist, in welcher zwischen der Matritze 11 und der Matritze 12 die vorbestimmte Kavität 22 freigehalten ist und zwischen der Matritze 11 und der Matritze 13 die Kavität 23 offengelassen ist. Die Kavität 22 ist bereits teilweise durch den eingelegten Vorformling 44 ausgefüllt. Als nächster Schritt wird nun der Schieber 30, welcher zwischen den Matritzenteilen 12 und 13 angeordnet ist, in Pfeilrichtung 37 auf das ihm gegenüberliegende Schwertteil 50 hin verfahren, bis der Schieber 30 die in Fig. 2a dargestellte Position erreicht hat, in der er im wesentlichen bündig mit dem freien Ende 51 des Schwertteils 50 sowie dem freien Ende 41 des Randes 45 des Vorformlings 44 abschließt. Der Schieber 30 weist an seinem dem Schwertteil 50 zugewandten Ende eine Nut 31 auf, in die die freien Enden 51 und 41 hineinfahren, wobei eine konische Öffnung 32 im Randbereich der Nut 31 das Fangen und Einfahren des Schwertteiles 50 und des Randes 45 erleichtert. Beim Einfahren des Schiebers 30 auf das Schwertteil 50 kann das Schwertteil 50 entgegen der Federkraft des Federelementes 55 elastisch in die Aufnahme 56 hineinfahren, um dann unter der Kraft des Federelementes 55 an die Endfläche der Nut 31 angedrückt zu werden.

Durch das Umfassen der freien Enden 41 und 51 des Vorformlings 44 und des Schwertteils 50 sind nunmehr die Kavitäten 22 und 23 dicht voneinander abgeschlossen.

In einem weiteren Verfahrensschritt erfolgt nunmehr ein Einpressen von Kunststoffschmelze unter niedrigem Druck im Bereich des kaschierten Feldes 42, wie es in Fig. 2a dargestellt ist. Das Einspritzen oder Einpressen des Kunststoffes unter niedrigem Druck erfolgt in einer dem Fachmann bekannten Weise über Düsen oder andere geeignete und in der Kunststoffspritzgußtechnik bekannte Wege.

In Fig. 2b ist nun eine Variante der erfindungsgemäßen Vorrichtung des Formwerkzeuges 10 dargestellt, bei der an einer Seitenwand 18 der Matritze 12 Vorsprünge 15 angeordnet sind. Nach dem Schließen des Formwerkzeugs 10 durch Verfahren der Matritze 12 in Richtung auf die Matritze 11 werden die Vorsprünge 15 gegen den Rand 45 des Vorformlings 44 gefahren und dieser Rand 45 bereichsweise an das Schwertteil 50 angedrückt. Im Schieber 30 sind an den Seitenwänden 34 Aufnahmenuten 35 angeordnet, in die die Vorsprünge 15 eingefahren, wenn der Schieber 30 gegen das Schwertteil 50 verfahren wird, wie auch aus Fig. 2b zu entnehmen ist.

Wie aus Fig. 2c zu entnehmen ist, sind günstigerweise mehrere Vorsprünge 15 an der Seitenwand 18 der Matritze 12 angeordnet, um ein gleichmäßiges Andrücken des freien Endes 41 des Vorformlings 44 an das Schwertteil 50 zu erreichen.

In Fig. 2b ist ebenfalls noch dargestellt eine Kühlschlaufe einer Kühleinrichtung 19, die in der Matritze 12 angeordnet sein kann. Diese Kühleinreichtung 19 dient der Kühlung des Kunststoffmaterials im Bereich des kaschierten Feldes 42.

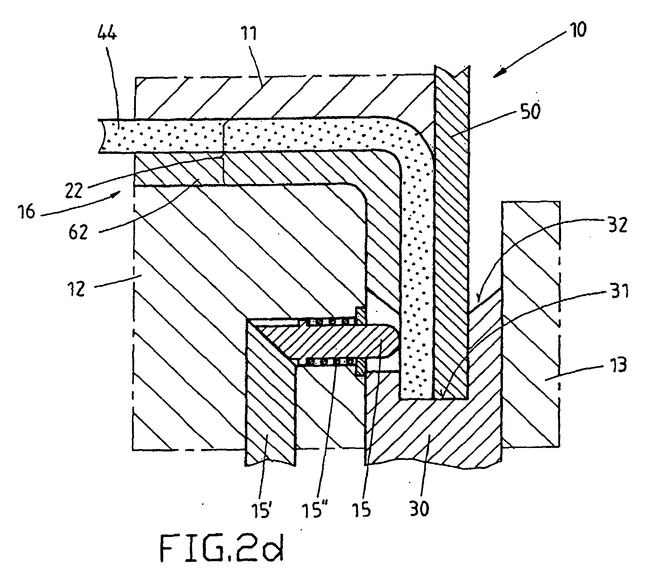

In Fig. 2d ist nun noch eine Variante der in Fig. 2b dargestellten Ausfürhungsform dargestellt, bei der in der Matritze 12 ein Zapfen 15 in einem Kanal angeordnet ist, wobei der Zapfen 15 über Federelemente 15" an der Außenwand der Matritze 12 abstützt. Die Andrucktiefe des Zapfens 15 kann über ein Stellglied 15' verändert werden. Hierzu wird das Stellglied 15' mehr oder weniger weit auf die rückwärtige Schräge des Zapfens 15 aufgeschoben.

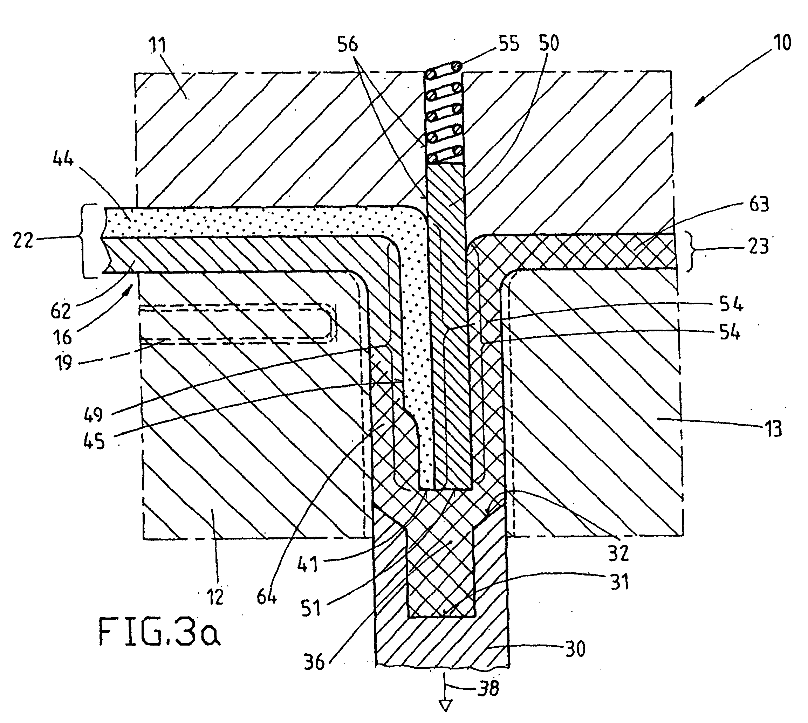

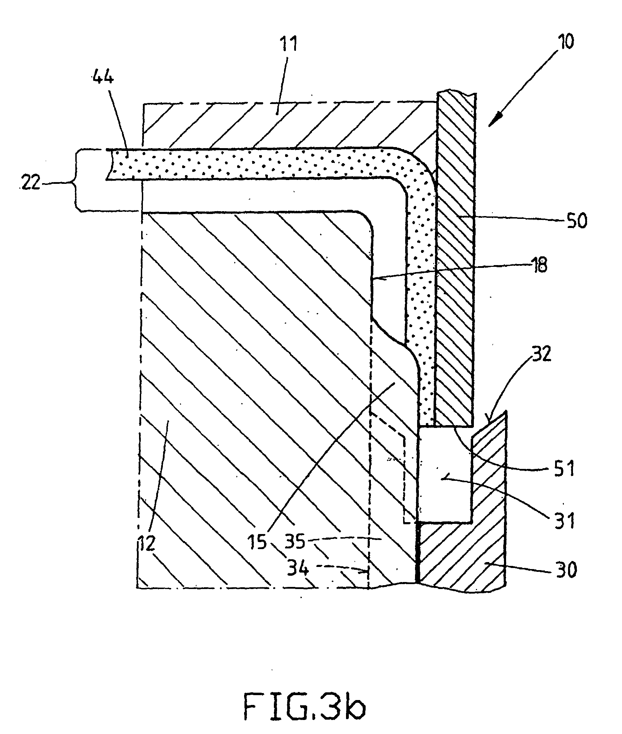

In Fig. 3a sind nunmehr weitere Schritte des erfindungsgemäßen Verfahrens sowie weitere Details der erfindungsgemäßen Vorrichtung wiedergegeben. Nach dem Einbringen des Kunststoffträgermaterials 62 in den Bereich des kaschierten Feldes 42 in der Kavität 22 wird nun der Schieber 30 in Pfeilrichtung 38 zurückgefahren und zwar soweit, bis sich der in Fig. 3a dargestellte Kanal 36 geöffnet hat. Nach oder während dem Öffnen des Kanals 36 ist/wird die Kühleinrichtung 19 betrieben, um den Bereich des kaschierten Feldes 42 zu kühlen. Im Bereich der Kavität 23 im spritzblanken Feld 43 wird nunmehr in der dem Fachmann bekannten Weise unter Hochdruck Kunststoffschmelze eingespritzt, die das Kunststoffspiegelmaterial bzw. das Kunststoffinsertmaterial bzw. den Kunststoffdekorbereich bildet. Diese Schmelze nimmt über den Kanal 36 ihren Weg bis in den Bereich entlang der Seitenwand 18 der Matritze 12 in der Kavität 22. In diesem über die Kühleinrichtung 19 abgekühlten Bereich vermag die unter Hochdruck eingespritzte Kunststoffschmelze noch innerhalb einer Übergangszone 64 eine Teilaufschmelzung des dort eingebrachten Kunststoffträgermaterials 62 zu bewirken. Durch diese Teilaufschmelzung wird eine innige Verbindung der beiden Materialien miteinander geschaffen, welches sich positiv auf die Stabilität des derart gefertigten Kunststoffformteils auswirkt. Zu bemerken wäre an dieser Stelle noch, daß die in den Fig. 2b, 2c und 2d dargestellten Vorsprünge/Zapfen 15 auch in diesem Verfahrensschritt noch an den Rändern 45 des Vorformlings 44 angedrückt bleiben, solange sich die Matritze 12 nicht bewegt. Die Vorsprünge 15 verbleiben mit ihren unteren Enden in den Aufnahmenuten 35, so daß keine Schmelze hinter die Vorsprünge 15 treten kann. Hierdurch wird es gewährleistet, daß das Formwerkzeug 10 in leichter Weise nach Erstarren der Schmelze wieder geöffnet werden kann (vgl. hierzu Fig. 3b).

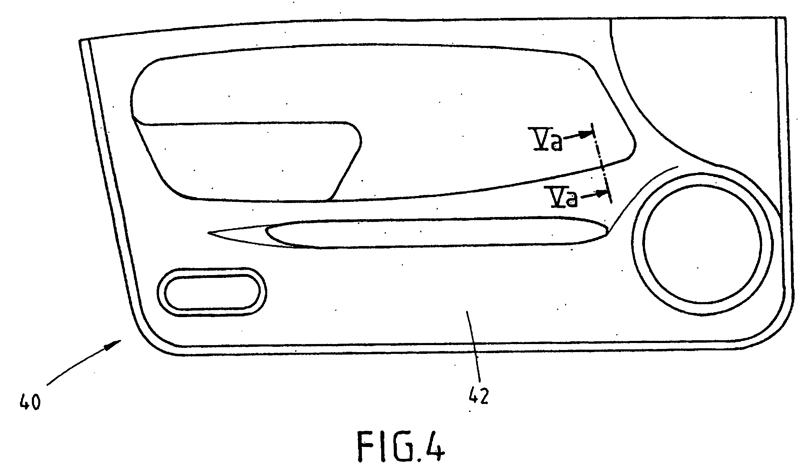

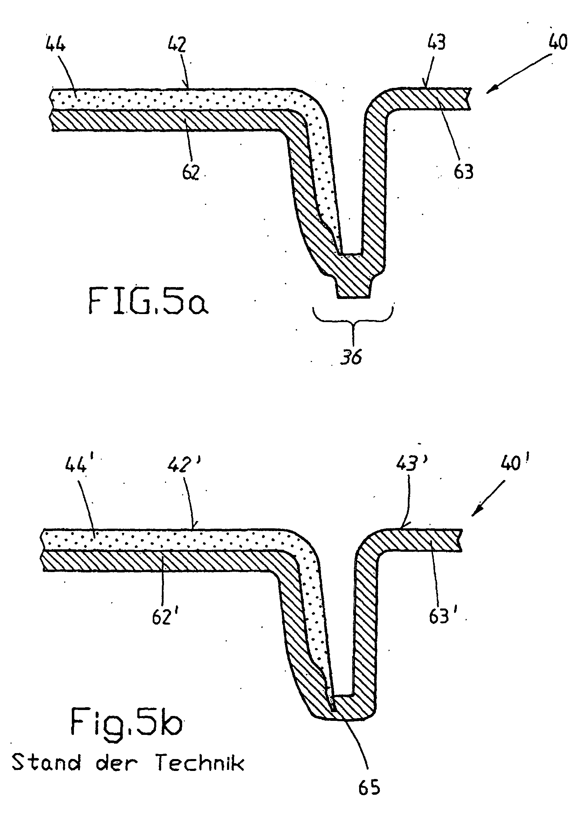

In Fig. 4 ist nunmehr ein erfindungsgemäßes Kunststoffformteil 40 wiedergegeben, welches kaschierte Felder 42 und spritzblanke Felder 43 aufweist. Angegeben ist dort ebenfalls ein Schnitt Vₐ-Vₐ, der in Fig. 5a wiedergegeben ist, und in dem dargestellt ist, wie der erfindungsgemäße Übergang zwischen den kaschierten Feldern 42 und den spritzblanken Feldern 43 aussieht. Wie Fig. 5a zu entnehmen ist, befindet sich hinter dem Abdeckmaterial/Vorformling 44 eine im Wesentlichen gleichbleibend starke Schicht aus Kunststoffträgermaterial 62. Im Bereich des Kanals 36 ist ebenfalls eine im Wesentlichen gleichbleibende Materialstärke des Kunststoffträgermaterials vorhanden. Die Nahtstelle ist bruchstabil und ohne Sollbruchstelle.

In Fig. 5b ist nun ein entsprechender Schnitt durch ein Kunststoffformteil 40' entsprechend dem Stand der Technik wiedergegeben. Dort sind ein Abdeckmaterial 44' und Kunststoffträgermaterial 63' und 62' in dem spritzblanken Feld 43' und dem kaschierten Feld 42' wiedergeben. Wie aus dieser Figur ersichtlich ist, ist beim Stand der Technik ein Materialüberhang 65 im Kanal 36 vorhanden, der eine Sollbruchstelle darstellt, an der das Kunststoffformteil 40' stark bruchgefährdet ist. Dieser Materialüberhang 65 kommt beim Stand der Technik dadurch zustande, daß zwischen Schieber und Matritze ein kleiner Rest des Abdeckmaterials 44' zwischen den beiden Teilen zur Abdichtung der Felder 42' und 43' eingeklemmt wird. Beim Zurückfahren des Schiebers wird dieser Materialüberhang dann von Hochdruckschmelze umspült und bleibt mehr oder weniger komplett in diesem Bereich erhalten.

Die vorliegende Erfindung weiß diesen Nachteil völlig zu vermeiden.

Es bleibt nun noch zu bemerken, daß die hier dargestellten Ausführungsformen nur beispielhafte Verwirklichungen der Erfindung sind. Diese ist jedoch nicht darauf beschränkt. Es versteht sich, daß die dargestellten Komponenten der Erfindung auch in anderen Materialien ausgeführt sein können, die über ähnliche Eigenschaften verfügen wie diejenigen, die hier beschrieben sind.

### Bezugszeichenliste:

- 10: Formwerkzeug
- 11: Matritze
- 12: Matritze
- 13: Matritze
- 14: Anlegestelle
- 15: Mittel/Nase/Vorsprünge/Zapfen
- 15': Stellglied
- 15": Federelemente
- 16: Arbeitsstellung der Matritzen
- 17: geöffnete Stellung der Matritzen
- 18: Seitenwand (der Matritze 12)
- 19: Kühleinrichtung

- 22: Kavität (des zu kaschierenden Feldes)
- 23: Kavität (des spritzblanken Feldes)

- 30: Schieber
- 31: Nut (am Schieber 30)
- 32: konische Öffnung (am Schieber 30)
- 34: Seitenwände (des Schiebers)
- 35: Aufnahmenuten (am Schieber 30)
- 36: Standard-Kanal, Kanalbereich
- 37: Pfeilrichtung
- 38: Pfeilrichtung

- 40: Kunststoffformteil
- 40': Kunststoffformteil (beim Stand der Technik)
- 41: freies Ende von 45
- 42: kaschiertes Feld
- 42': kaschiertes Feld (beim Stand der Technik)
- 43: spritzblankes Feld/Kunststoffspiegel
- 43': spritzblankes Feld/Kunststoffspiegel (beim Stand der Technik)
- 44: Abdeckmaterial/Vorformling
- 44': Abdeckmaterial (beim Stand der Technik)
- 45: Rand (des Vorformlings)
- 46: Rückseite (des Vorformlings)
- 49: Tiefe der Ränder des Abdeckmaterials

- 50: Schwertteil
- 51: freies Ende (des Schwertteils 50)
- 52: Schraubmittel/Stellschrauben
- 53: Stellmutter
- 54: Ausfuhrhub (des Schwertteils 50)
- 55: Federelemente
- 56: Aufnahme
- 57: Gewinde (im Schwertteil 50)

- 62: Kunststoffträger des kaschierten Feldes/Kunststoffträger-Material
- 62': Kunststoffträger des kaschierten Feldes/Kunststoffträger-Material (beim Stand der Technik)
- 63: Kunststoff in den spritzblanken Feldern/Kunststoffspiegel-Material
- 63': Kunststoff in den spritzblanken Feldern/Kunststoffspiegel-Material
(beim Stand der Technik)
- 64: Übergangszone
- 65: Materialüberhang (beim Stand der Technik)

## Patentansprüche

1. Verfahren zum Herstellen eines Kunststoffformteils (40), welches mehrere Felder (42, 43) umfaßt, von denen wenigstens ein Feld (42) mit einem Abdeckmaterial (44) kaschiert ist, während das oder jedes andere Feld (43) spritzblank ist,
und bei dem das Abdeckmaterial (44) in einem ersten Schritt vorgeformt wird,
und bei dem der oder jeder derart entstandene Vorformling (44) in einem zweiten Schritt jeweils an der Stelle (13) in die Kavität (23, 22) eines Formwerkzeugs (10) eingelegt wird, die dem jeweils zu kaschierenden Feld entspricht,
und bei dem in einem weiteren Schritt die Kavitäten (23, 22) der spritzblanken und der zu kaschierenden Felder (42, 43) im Formwerkzeug (10) unter Einschaltung von einem oder mehreren Schiebern (30) gegeneinander abgedichtet werden,
und bei dem im Anschluß daran, das oder jedes spritzblanke Feld (43) durch unter hohem Druck eingespritzte Kunststoffschmelze erzeugt wird, und das oder jedes der zu kaschierenden Felder (42) unter niedrigem Druck mit einem Kunststoffträger (62) versehen wird,
**dadurch gekennzeichnet,**
**daß** das Abdichten der Kavitäten (23, 22) voneinander dadurch erfolgt, daß
a) der oder die in die Kavität (23) hineingebogenen Ränder (45) des oder jedes Vorformlings (44) im, in das Formwerkzeug (10) eingelegten Zustand, an einem, das zu kaschierende Feld (42) begrenzendem, Schwertteil (50) anliegen, und
b) daß der oder jeder Schieber (30) von der gegenüberliegenden Seite des Formwerkzeugs (10) aus jeweils gegen den oder die korrespondierenden Schwertteile (50) gefahren wird, wobei der oder jeder Schieber (30) eine Nut (31) zum wenigstens bereichsweisen Umfassen der freien Enden (51) der Schwertteile (50) und der daran anliegenden freien Enden (41) der Ränder (45) des Vorformlings (44) aufweisen.

2. Verfahren nach Anspruch 1, **dadurch gekennzeichnet, daß** nach dem Abschließen der Felder (42, 43) voneinander zunächst in der oder jeder Kavität (22) der zu kaschierenden Felder (42) ein Niederdruck Kunststoffspritzen erfolgt,
und bei dem im Anschluß daran, und nach einem partiellen Zurückfahren des Schiebers (30) unter Öffnung eines Standard-Kanals (36) zwischen Schieber (30) und Schwertteil (50), ein Hochdruck Kunststoffspritzen in der oder jeder Kavität (23) der spritzblanken Felder (43) erfolgt, wobei die kaschierten Felder (42) wenigstens bereichsweise einer gesteuerten Kühlung unterworfen sind.

3. Verfahren nach Anspruch 1 oder 2, **dadurch gekennzeichnet, daß** das Schwertteil (50) elastisch druckbeaufschlagt ist, und bei seinem Ausfuhrhub (54) in die Kavität (22, 23) hinein über Steuermittel (51, 52, 57) begrenzt ist.

4. Verfahren nach einem der Ansprüche 1 bis 3, **dadurch gekennzeichnet, daß** das Schwertteil (50) mittels eines oder mehrerer Federelemente (55) druckbeaufschlagt ist.

5. Verfahren nach einem der Ansprüche 1 bis 4, **dadurch gekennzeichnet, daß** die Steuermittel Stellschrauben (52) umfassen.

6. Verfahren nach einem der Ansprüche 1 bis 4, **dadurch gekennzeichnet, daß** die Steuermittel einen oder mehrere Exzenter umfassen.

7. Verfahren nach einem der Ansprüche 1 bis 6, **dadurch gekennzeichnet, daß** die Nut (31) am Schieber (30) wenigstens bereichsweise eine konische Öffnung (32) aufweist.

8. Verfahren nach einem der Ansprüche 1 bis 7, **dadurch gekennzeichnet, daß** Mittel (15) vorgesehen sind, mittels derer die an dem Schwertteil (50) liegenden Ränder (45) des oder jeden Vorformlings (44) nach dem Schließen des Formwerkzeugs (10) zumindest stellenweise an das Schwert (30) angedrückt werden.

9. Verfahren nach einem der Ansprüche 1 bis 8, **dadurch gekennzeichnet, daß** die Rückseite (46) des Abdeckmaterials/ Vorformlings (44) durch Temperung zu einer Kunststofflage formfixierender Steifigkeit verschmolzen ist.

10. Verfahren nach einem der Ansprüche 1 und 9, **dadurch gekennzeichnet, daß** das Abdeckmaterial/der Vorformling (44) Nadel- und/oder Spinnflies beinhaltet.

11. Vorrichtung, insbesondere zur Durchführung eines Verfahrens nach einem der Ansprüche 1 bis 10, beinhaltend eine erste Matritze (11) und wenigstens eine, der ersten gegenüberliegend angeordnete, zweite Matritze (12, 13),
wobei die Matritzen (11, 12, 13) im Wesentlichen die Form eines zwischen beiden Matritzen (11, 12, 13) formbaren Kunststoffformteils (40) aufweisen,
und die Matritzen (11, 12, 13) in eine Arbeitstellung (16) und in eine geöffnete Stellung (17) zueinander verfahrbar sind,
und sich zwischen den Matritzen (11, 12, 13) eine Kavität (22, 23) zur Erzeugung eines Kunststoffformteils (40) befindet,
und bei der im Bereich der zweiten Matritze (12, 13) Schieber (30) angeordnet sind, mittels derer die Kavität (22, 23) in spritzblanke und in zu kaschierende Felder (42, 43) unterteilbar ist,
und bei der die erste Matritze (11) im Bereich der zu kaschierenden Felder (42) mit den Mitteln zur Aufnahme und Festlegung eines Abdeckmaterials (44) ausgestattet ist,
**dadurch gekennzeichnet,**
**daß** im Bereich der ersten Matritze (11) wenigstens ein, als separates Bauteil ausgeführtes Schwertteil (50) angeordnet ist, welches spritzblanke und zu kaschierende Felder (42, 43) voneinander trennt,
und **daß** der oder jeder Schieber (30) in der Arbeitsstellung (16) der Vorrichtung jeweils dem oder jedem korrespondierenden Schwertteil (50) gegenüberliegt,
und wobei der oder jeder Schieber (30) an seinem in die Kavität (22, 23) hineinragendem Ende eine Nut (31) zum wenigstens bereichsweisen Umfassen der freien Enden (51) der Schwertteile (50) und/oder der daran anliegenden freien Enden (41) der Ränder (45) des Abdeckmaterials (44) aufweist.

12. Vorrichtung nach Anspruch 11, **dadurch gekennzeichnet, daß** das Schwertteil (50) elastisch druckbeaufschlagt ist, und bei seinem Ausfuhrhub (54) in die Kavität (22, 23) hinein über voreinstellbare Steuermittel (51, 52, 57) begrenzt ist.

13. Vorrichtung nach Anspruch 12, **dadurch gekennzeichnet, daß** das Schwertteil (50) in einer Aufnahme (56) in der ersten Matritze (11) angeordnet ist und dort mittels eines oder mehrerer Federelemente (55) abgestützt ist.

14. Vorrichtung nach Anspruch 12, **dadurch gekennzeichnet, daß** die Steuermittel eine oder mehrere Stellschrauben (52, 53) umfassen, welche einends in Gewinde (57) eingreifen, die im rückwärtigen Ende des Schwertteils (50) eingebracht sind, und die anderenends an der Matritze (11) angreifen.

15. Vorrichtung nach einem der Ansprüche 12 oder 14, **dadurch gekennzeichnet, daß** die Steuermittel einen oder mehrere Exzenter umfassen.

16. Vorrichtung nach Anspruch 11, **dadurch gekennzeichnet, daß** die Nut (31) am Schieber (30) wenigstens bereichsweise eine konische Öffnung (32) aufweist.

17. Vorrichtung nach Anspruch 11, **dadurch gekennzeichnet, daß** an der zweiten Matritze (12) Mittel (15) angeordnet sind, über die die an dem Schwertteil (50) anliegenden Ränder (45) des oder jeden Vorformlings (44) nach dem Schließen des Formwerkzeugs (10) zumindest stellenweise an das Schwertteil (50) angedrückt werden.

18. Vorrichtung nach Anspruch 11 oder 17, **dadurch gekennzeichnet, daß** die Mittel Vorsprünge (15) sind, die an dem oder den Schiebern (30) zugewandten Seitenwänden (18) der zweiten Matritzen (12) angeordnet sind, wobei im Kopfbereich des Schiebers (30) in dessen Seitenwänden (34) Aufnahmenuten (35) eingelassen sind, in die die Vorsprünge (15) bei einer relativ-Bewegung des Schiebers (30) gegenüber der Matritze (12) ein- und ausfahrbar sind.

19. Vorrichtung nach einem der Ansprüche 12 oder 18, **dadurch gekennzeichnet, daß** an der zweiten Matritze (12) zumindest im Bereich der zu kaschierenden Felder (42) eine Kühleinrichtung (19) vorgesehen ist, die über eine Steuereinrichtung regelbar ist.

20. Kunststoffformteil, welches mehrere Felder (42, 43) umfasst, von denen wenigstens eines mit einem Abdeckmaterial (44) kaschiert ist,
und bei dem der Kunststoff-Träger (62) des kaschierten Feldes (42) unter einem, bei niedrigerem Druck und niedrigerer Temperatur gespritzten Kunststoff besteht als der in den spritzblanken Feldern (43) gespritzte Kunststoff (63), nach einem der Ansprüche 1 bis 19, **dadurch gekennzeichnet,**
**daß** im Grenzbereich zwischen den kaschierten und den spritzblanken Feldern (42, 43) eine Übergangszone (64) vorliegt, in der Kunststoffträger-Material (62) durch Kunststoffspiegel-Material (63) wiederaufgeschmolzen worden ist,
wobei diese Zone (64) innerhalb eines, über die Tiefe (49) der Ränder (45) des Abdeckmaterials (44) definierten Bereichs liegt.

## Claims

1. A method for producing a moulded plastic part (40) comprising several zones (42, 43) of which at least one zone (42) is backed with a cover material (44) while the other or every other zone (43) is plain,
and where the cover material (44) is premoulded in one step,
and where the premoulding (44), or each premoulding produced in this way, is inserted in a second step into the cavity (23, 22) of a moulding die (10) in each case at the location (13) which corresponds to the zone to be backed,
and where, in another step, the cavities (23, 22) of the plain zones and the zones to be backed (42, 43) are sealed against each other in the moulding die (10) through the use of one or several slides (30),
and where, subsequently, the plain or every plain zone (43) is produced by plastic melt being injected at high pressure, and the zone or every zone to be backed (42) is provided with a plastic carrier (62) at low pressure,
**characterised in that**
the cavities (23, 22) are sealed against each other **in that**
a) the edge or edges (45) bent into the cavity (23) of the one or every premoulding (44), in the condition inserted into the moulding die (10), are in contact with a sword-like part (50) adjoining the zone to be backed (42), and
b) the one or every slide (30) is moved, from the opposite side of the moulding die (10), in each case against the corresponding sword-like part(s) (50), the one or every slide (30) exhibiting a groove (31) to surround, at least in some sections, the free ends (51) of the sword-like parts (50) and the adjacent free ends (41) of the edges (45) of the premoulding (44).

2. A method according to claim 1, **characterised in that** after the closing of the zones (42, 43) from each other plastic is injected initially at low pressure into one or every cavity (22) of the zones to be backed (42),
and subsequently, and after a partial reverse motion of the slide (30) and the opening of a standard duct (36) between the slide (30) and the sword-like part (50), plastic is injected at high pressure into the one or every cavity (23) of the plain zones (43), the backed zones (42) being subjected, at least in some sections, to controlled cooling.

3. A method according to claim 1 or 2, **characterised in that** the sword-like part (50) is subjected flexibly to pressure and, during its extension stroke (54) into the cavity (22, 23), is limited by control devices (51, 52, 57).

4. A method according to one of the claims 1 to 3, **characterised in that** the sword-like part (50) is subjected to pressure by one or several spring elements (55).

5. A method according to one of the claims 1 to 4, **characterised in that** the control devices comprise adjusting screws (52).

6. A method according to one of the claims 1 to 4, **characterised in that** the control devices comprise one or more eccentrics.

7. A method according to one of the claims 1 to 6, **characterised in that** the groove (31) on the slide (30) exhibits a tapered opening (32) at least in some sections.

8. A method according to one of the claims 1 to 7, **characterised in that** facilities (15) are provided with which the edges (45) in contact with the sword-like part (50) of the one or every premoulding (44) is pressed, at least at some points, against the slide (30) after the moulding die (10) has closed.

9. A method according to one of the claims 1 to 8, **characterised in that** the rear side (46) of the cover material/premoulding (44) is melted by heating into a plastic layer having a rigidity which fixes the shape.

10. A method according to one of the claims 1 and 9, **characterised in that** the cover material/premoulding (44) contains needle-punched and/or spin-bonded nonwoven.

11. A device, in particular to perform a method according to one of the claims 1 to 10, containing a first female mould (11) and at least one second female mould (12, 13) arranged opposite the first one,
the female moulds (11, 12, 13) mainly exhibiting the form of a moulded plastic part (40) which can be shaped between both female moulds (11, 12, 13),
and the female moulds (11, 12, 13) being movable into a working position (16) and into an opened position (17) in relation to each other,
and a cavity (22, 23) being located between the female moulds (11, 12, 13) to produce a moulded plastic part (40),
and in which slides (30), by means of which the cavity (22, 23) can be subdivided into plain zones and zones to be backed (42, 43), are arranged in the area of the second female mould (12, 13),
and in which the first female mould (11) is provided with the means to hold and secure a cover material (44) in the area of the zones to be backed (42),
**characterised in that**
at least one sword-like part (50), designed as a separate component which separates plain zones and zones to be backed (42, 43), is arranged in the area of the first female mould (11),
and that the one or every slide (30) is opposite the one or every corresponding sword-like part (50) in the working position (16) of the device,
and that the one or every slide (30) has at its end protruding into the cavity (22, 23) a groove (31) for surrounding, at least in some sections, the free ends (51) of the sword-like parts (50) and/or the adjacent free ends (41) of the edges (45) of the cover material (44).

12. A device according to claim 11, **characterised in that** the sword-like part (50) is subjected flexibly to pressure and, during its extension stroke (54) into the cavity (22, 23), is limited by pre-adjustable control devices (51, 52, 57).

13. A device according to claim 12, **characterised in that** the sword-like part (50) is located in a holder (56) in the first female mould (11) and is supported there by means of one or several spring elements (55).

14. A device according to claim 12, **characterised in that** the control devices comprise one or several adjusting screws (52, 53) which, at the one end, mesh with thread (57) which is provided in the rear end of the sword-like part (50), and which, at the other end, engage with the female mould (11).

15. A device according to one of the claims 12 or 14, **characterised in that** the control devices comprise one or several eccentrics.

16. A device according to claim 11, **characterised in that** the groove (31) on the slide (30) has a tapered opening (32) at least in some sections.

17. A device according to claim 11, **characterised in that** on the second female mould (12) devices (15) are arranged by means of which the edges (45) adjoining the sword-like part (50) of the one or every premoulding (44) are pressed against the sword-like part (50), at least in some sections, after the mould (10) has closed.

18. A device according to claim 11 or 17, **characterised in that** the devices are projections (15) which are arranged on the side walls (18) facing the slide(s) (30) of the second female moulds (12), whereby in the head section of the slide (30) holding grooves (35) are provided in its side walls (34) into which the projections (15) can be introduced and withdrawn during a motion of the slide (30) relative to the female mould (12).

19. A device according to claim 11 or 18, **characterised in that** on the second female mould (12), at least in the area of the zones (42) to be backed, a cooling facility (19) is arranged which can be regulated by a control facility.

20. A plastic moulded plastic part which comprises several zones (42, 43) at least one of which is backed with a cover material (44) and in which the plastic carrier (62) of the backed zone (42) is located under a plastic injected at a lower pressure and lower temperature than the plastic (63) injected into the plain zones (43), according to one of the claims 1 to 19, **characterised in that**
in the boundary area between the backed and the plain zones (42, 43) there is a transitional zone (64) in which plastic carrier material (62) has been remelted by plastic mirror material (63)
whereby this zone (64) lies within an area defined by the depth (49) of the edges (45) of the cover material (44).

## Revendications

1. Procédé de fabrication d'une pièce moulée en matière synthétique (40) comprenant plusieurs zones (42, 43), dont au moins une (42) est revêtue d'un matériau couvrant (44), tandis que l'autre zone (43) se trouve à nu par injection,
et dans lequel le matériau couvrant (44) subit dans un premier temps un prémodelage,
et dans lequel l'ébauche (44) ou toute ébauche créée de cette façon est déposée, dans un deuxième temps, dans la cavité (23, 22) d'un outil de moulage (10), à l'endroit (13) correspondant à la zone à revêtir,
et dans lequel, au cours d'une étape suivante, les cavités (23, 22) des zones à nu par injection et des zones (42, 43) à revêtir sont étanchées l'une contre l'autre dans l'outil de moulage (10), avec activation d'un ou plusieurs tiroirs (30),
et dans lequel, après cela, la ou chaque zone (43) à nu par injection est générée par injection sous haute pression de la matière synthétique en fusion et la ou chaque zone (42) à revêtir reçoit sous basse pression un support (62) en matière synthétique,
**caractérisé en ce que**
l'étanchéité des cavités (23, 22) l'une par rapport à l'autre s'obtient par le fait que
a) le ou les bord(s) (45) incurvé(s) dans la cavité (23) d'une ou de chaque ébauche (44), dans l'état déposé dans l'outil de moulage (10), applique(nt) contre une pièce en épée (50) limitant la zone (42) à revêtir, et que
b) le ou chaque curseur (30) partant du côté opposé de l'outil de moulage (10) est amené à se déplacer jusque contre la ou les pièce(s) en épée (50) correspondante(s), sachant que le ou chaque tiroir (30) présente une rainure (31) servant à entourer au moins localement les extrémités libres (51) des pièces en épée (50) et des extrémités libres (41), qui les jouxtent, des bords (45) de l'ébauche (44).

2. Procédé selon la revendication 1, **caractérisé en ce qu'**après la clôture des zones (42, 43) l'une par rapport à l'autre, une injection de matière synthétique à basse pression a lieu dans un premier temps dans une ou chaque cavité (22) des zones (42) à revêtir.
et dans lequel à la suite et après un recul partiel du tiroir (30) avec ouverture d'un conduit standard (36) entre le tiroir (30) et la pièce en épée (50), une injection de matière synthétique sous haute pression a lieu dans une ou chaque cavité (23) des zones (43) à nu par injection, sachant que les zones revêtues (42) subissent au moins localement un refroidissement piloté.

3. Procédé selon la revendication 1 ou 2, **caractérisé en ce que** la pièce en épée (50) est mise sous pression de manière élastique, et que sa course (54) de pénétration dans la cavité (22, 23) est limitée par des moyens de commande (51, 52, 57).

4. Procédé selon l'une des revendications 1 à 3, **caractérisé en ce que** la pièce en épée (50) est mise sous pression par un ou plusieurs éléments à ressort (55).

5. Procédé selon l'une des revendications 1 à 4, **caractérisé en ce que** les moyens de commande comprennent des vis de réglage (52).

6. Procédé selon l'une des revendications 1 à 4, **caractérisé en ce que** les moyens de commande comprennent un ou plusieurs excentriques.

7. Procédé selon l'une des revendications 1 à 6, **caractérisé en ce que** la rainure (31) présente sur le tiroir (30) comporte au moins localement une ouverture conique (32).

8. Procédé selon l'une des revendications 1 à 7, **caractérisé en ce que** des moyens (15) ont été prévus permettant d'appliquer au moins par endroits contre l'épée (30), après fermeture de l'outil de moulage (10),
les bords (45) d'une ou de chaque ébauche (44) riverains de la pièce en épée (50).

9. Procédé selon l'une des revendications 1 à 8, **caractérisé en ce que** le dos (46) du matériau couvrant / de l'ébauche (44) a fondu, par thermostatisation, en une couche de matière synthétique présentant une rigidité figeant sa forme.

10. Procédé selon l'une des revendications 1 et 9, **caractérisé en ce que** le matériau couvrant / l'ébauche (44) contient un intissé aiguilleté et/ou un intissé de filature.

11. Dispositif, notamment destiné à la réalisation d'un procédé selon l'une des revendications 1 à 10, comprenant une première matrice (11) et au moins une deuxième matrice (12, 13) placée en face de la première,
sachant que les matrices (11, 12, 13) présentent pour l'essentiel la forme d'une pièce en matière synthétique (40) modelable entre les deux matrices (11, 12, 13),
et que les matrices (11, 12, 13) sont déplaçables jusque sur une position de travail (16) et sur une position (17) ouverte l'une par rapport à l'autre,
et qu'entre les matrices (11, 12, 13) se trouve une cavité (22, 23) servant à générer une pièce moulée (40) en matière synthétique,
et au niveau de laquelle sont disposés des tiroirs (30) dans la zone de la deuxième matrice (12, 13), tiroirs au moyen desquels il est possible de subdiviser la cavité (22, 23) en zones à nu par injection et en zones à revêtir (42, 43),
et au niveau de laquelle la première matrice (11) est équipée, dans le domaine des zones (42) à revêtir, des moyens servant à recevoir et immobiliser un matériau couvrant (44),
**caractérisé en ce que**,
dans la zone de la première matrice (11) est disposée au moins une pièce en épée (50) réalisée sous forme de composant séparé, cette pièce séparant l'une de l'autre les zones (42, 43) à nu par injection et à revêtir,
et **en ce que** le ou chaque tiroir (30), lorsque le dispositif se trouve en position de travail (16), se trouve en face de la ou de chaque pièce en épée (50) correspondante,
et sachant que le ou chaque tiroir (30), en son extrémité faisant saillie dans la cavité (22, 23), présente une rainure (31) servant à entourer au moins localement les extrémité libres (51) des pièces en épée (50) et/ou les extrémité libres (41), qui les jouxtent, des bords (45) du matériau couvrant (44).

12. Dispositif selon la revendication 11, **caractérisé en ce que** la pièce en épée (50) est mise sous pression de manière élastique et que sa course (54) de pénétration dans la cavité (22, 23) est limitée par des moyens de commande (51, 52, 57) préréglables.

13. Dispositif selon la revendication 12, **caractérisé en ce que** la pièce en épée (50) est disposée dans un logement (56) dans la première matrice (11) et qu'elle s'y trouve en appui au moyen d'un ou plusieurs élément(s) ressort(s) (55).

14. Dispositif selon la revendication 12, **caractérisé en ce que** les moyens de commande comprennent une ou plusieurs vis de réglage (52, 53), dont une extrémité engrène dans des taraudages (57) ménagés dans l'extrémité arrière de la pièce en épée (50), et dont l'autre extrémité attaque la matrice (11).

15. Dispositif selon l'une des revendications 12 ou 14, **caractérisé en ce que** les moyens de commande comprennent un ou plusieurs excentrique(s).

16. Dispositif selon la revendication 11, **caractérisé en ce que** la rainure (31) située contre le tiroir (30) présente au moins localement une ouverture conique (32).

17. Dispositif selon la revendication 11, **caractérisé en ce que** contre la deuxième matrice (12) sont disposés des moyens (15) permettant d'appliquer au moins par endroits, contre la pièce en épée (50), après fermeture de l'outil de moulage (10), les bords (45) d'une où de chaque ébauche (44) riverains de la pièce en épée (50).

18. Dispositif selon la revendication 11 ou 17, **caractérisé en ce que** ces moyens sont des saillies (15) disposées contre les parois latérales (18), regardant le ou les tiroirs (30), de la deuxième matrice (12), sachant que dans la zone de tête du tiroir (30), dans les parois latérales (34) de ce dernier, des rainures-logements (35) ont été usinées, rainures dans lesquelles les saillies (15) peuvent entrer et sortir lorsque le tiroir (30) accomplit un mouvement relativement à la matrice (12).

19. Dispositif selon la revendication 11 ou 18, **caractérisé en ce que** sur la deuxième matrice (12) un dispositif de refroidissement (19) est prévu au moins dans le domaine des zones (42) à revêtir, ce dispositif de refroidissement étant régulable par un équipement de commande.

20. Pièce en matière synthétique moulée comprenant plusieurs zones (42, 43) dont au moins une est revêtue d'un matériau couvrant (44),
et sur laquelle le support (62) en matière synthétique de la zone revêtue (42) se trouve sous une matière synthétique injectée à pression plus basse et à une température plus basse que la matière synthétique (63) injectée dans les zones (43) à nu par injection, selon l'une des revendications 1 à 19, **caractérisée en ce que**,
dans la zone limite située entre les zones (42, 43) revêtues et à nu par injection (42, 43) se trouve une zone de transition (64) dans laquelle le support (62) en matière synthétique a de nouveau fondu en raison du matériau miroir (63) en matière synthétique,
sachant que cette zone (64) se trouve à l'intérieur d'un domaine défini par la profondeur (49) des bords (45) du matériau couvrant (44).
